## Europäisches Patentamt
## European Patent Office
## Office européen des brevets

(19)

(11) Veröffentlichungsnummer : **0 129 741**
**B1**

(12)

# EUROPÄISCHE PATENTSCHRIFT

(45) Veröffentlichungstag der Patentschrift :
09.09.87

(21) Anmeldenummer : 84106269.8

(22) Anmeldetag : 01.06.84

(51) Int. Cl.⁴ : **G 01 B 7/00**

(54) **Feinmesstaster.**

(30) Priorität : 22.06.83 DE 3322426

(43) Veröffentlichungstag der Anmeldung :
02.01.85 Patentblatt 85/01

(45) Bekanntmachung des Hinweises auf die Patenterteilung : 09.09.87 Patentblatt 87/37

(84) Benannte Vertragsstaaten :
**CH DE FR GB IT LI**

(56) Entgegenhaltungen :
**DE-A- 2 915 992**
**DE-A- 3 102 664**
**DE-A- 3 133 033**

(73) Patentinhaber : **Rheinmetall GmbH**
**Ulmenstrasse 125 Postfach 6609**
**D-4000 Düsseldorf (DE)**

(72) Erfinder : **Krempa, Hans-Ulrich**
**Stauffenbergstrasse 16**
**D-5000 Köln 60 (DE)**

Jouve, 18, rue St-Denis, 75001 Paris, France

## Beschreibung

Die Erfindung betrifft einen Feinmeßtaster mit den Merkmalen des Oberbegriffs des Patentanspruchs 1. Ein solcher Feinmeßtaster ist aus der DE-A-3 102 664 bekannt.

Solche Feinmeßtaster sollen Präzisionsmessungen bis zu tausendstel von Millimetern auf engem Raum möglich machen. Beim Einsatz des aus der DE-A-30 03 370 bekannten Meßtasters in einer Bohrung, in der er längsverschoben und gedreht wird, ist eine störungsfreie Übertragung der Bewegung des Tastkopfes auf die Biegefeder ohne störende seitliche Kräfte oder ohne störende Drech- oder Biegemomente schwer erreichbar. Es wurde daher in Weiterentwicklung dieses Meßtasters bereits vorgeschlagen, daß der das Taststück haltende Tasteinsatz als zylindrischer Bolzen gegen Drehung um die Zylinderachse gesichert in Achsrichtung des Tasteinsatzes zwischen zwei Anschlagflächen gleitbar geführt wird und eine Ausnehmung aufweist, deren obere Schrägwand mit ihrer gewölbten Außenkante punktförmig auf dem freien Ende der Biegefeder aufliegt. Diese aus der DE-A-31-02 664 bekannte Anordnung bedingt einerseits eine aufwendige Konstruktion und damit hohen Fertigungsaufwand. Andererseits können auch hier noch Meßfehler, bedingt durch das Verkanten des Tastbolzens, in dem Führungskörper entstehen, weil die Krafteinleitung über den Tasteinsatz genau mittig erfolgt, während die Kraftaufnahme durch die Biegefeder am äußeren Umfang des Tastbolzens erfolgt.

Aufgabe der Erfindung ist es daher, eine konstruktiv und fertigungsmäßig einfache Konstruktion eines Feinmeßtasters vorzuschlagen, die die Nachteile der bekannten Anordnung nicht aufweist, bei der also eine störungsfreie Übertragung der Bewegung des Tastkopfes auf die Biegefeder ohne störende seitliche Kräfte und ohne störende Dreh- oder Biegemomente sichergestellt ist. Dabei sollen störende Einflüsse vom Haltestück auf die Biegefeder vermieden werden, und es soll die Abdichtung verbessert sein und schließlich soll auch die Biegefeder selbst so sicher eingespannt sein und so günstig mit Dehnungsmeßstreifen ausgerüstet sein, daß keine Verfälschung der Messung eintreten kann.

Die zur Lösung der gestellten Aufgabe wesentlichen Merkmale der Erfindung sind im Patentanspruch 1 genannt. Die abhängigen Ansprüche kennzeichnen Ausführungsarten der Erfindung.

Durch die Erfindung ist also erreicht, daß bei Krafteinleitung über den Tasteinsatz genau mittig auch an der gleichen Stelle die Kraftaufnahme durch die Biegefeder erfolgt. Es erübrigt sich somit eine gewölbte Außenkante am Tasteinsatz, die höchste Fertigungsgenauigkeit erfordern würde, andererseits wird auch eine Verdrehsicherung als Stift mit entsprechender Anschlagfläche eingespart.

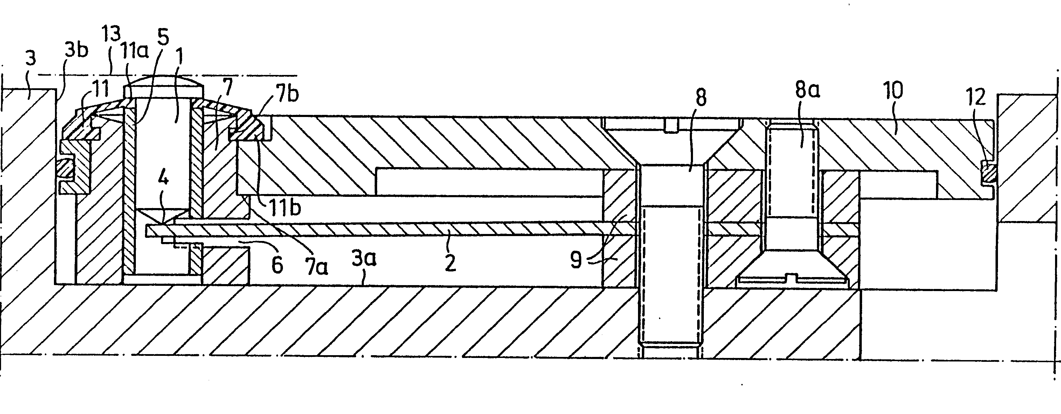

Die Zeichnung zeigt eine Ausführungsform des neuen Meßtasters im lotrechten Längsschnitt. Der Meßtaster ist im Haltestück 3 in einer nutartigen Vertiefung mit der Fläche 3a als Boden der Nut und mit den Seitenwänden 3b eingebaut. Das Taststück 1 liegt mit einer gewölbten Außenfläche an dem nur als gestrichelte Linie dargestellten zu messenden Werkstück 13 an. Das Taststück 1 ist in der im Führungskörper 7 gleitbar geführten Hülse 5 befestigt. Es liegt mit seiner konisch zulaufenden Spitze 4 an der Biegefeder 2 an, die durch die seitliche Öffnung 6 bis über die Mitte des Taststücks 1 in den Innenraum der Hülse 5 hineinragt. Die Biegefeder ist am anderen Ende durch die Schrauben 8, 8a zwischen Klemmstücken 9 eingeklemmt und mit dem Haltestück 3 fest verbunden. Außerdem halten die Schrauben 8, 8a die Schutzplatte 10 auf dem oberen Klemmstück 9. Die Schutzplatte 10 liegt mit ihrem anderen Ende auf einem Vorsprung 7a des Führungskörpers auf und wird durch eine in die Rille 7b des Führungskörpers eingreifende Membrandichtung 11 gehalten. Diese Dichtung ist mit ihrem inneren Rand 11a zwischen Taststück 1 und Hülse 5 eingeklemmt. Sie weist außen eine Verstärkung als Wulst 11b auf. Die Schutzplatte 10 ist gegenüber den Seitenwänden 3b des Haltestücks 3 durch eine Ringdichtung 12 abgedichtet. Als unterer Anschlag für die Verschiebung der Hülse 5 dient die Fläche 3a des Haltestücks 3, als oberer Anschlag die Unterfläche der seitlichen Öffnung 6 im Führungskörper 7. Der oder die Dehnungsmeßstreifen auf der Biegefeder sowie auch deren Einschnürung sind nicht dargestellt, da diese Teile ohne weiteres vorstellbar sind.

## Patentansprüche

1. Feinmeßtaster, der insbesondere als Wegaufnehmer dient, der mit einem oder mehreren Tastfühlern an einem Haltestück (3), z. B. einem Meßdorn, ausgestattet ist, bei dem das Taststück (1) des Tastfühlers sich am freien Ende einer Biegefeder (2) befindet, die mit ihrem anderen Ende mit Abstand von einer Fläche (3a) des Haltestücks am Haltestück (3) befestigt ist, bei dem der Tasteinsatz, in dem das Taststück (1) aufzunehmen und befestigt ist, in einem Führungskörper (7), der auf der genannten Fläche (3a) fest aufliegt, axial gleitbar gefühlt ist, bei dem der Führungskörper (7) eine seitliche Öffnung (6) aufweist, in die das freie Ende der Biegefeder hineinragt, und bei dem auf die Biegefeder an einer oder zwei Seiten je ein oder mehrere Dehnungsmeßstreifen als Mittel zur Umwandlung der Bewegung des Taststücks in ein elektrisches Signal aufgebracht ist bzw. sind, dadurch gekennzeichnet, daß der Tasteinsatz eine Hülse (5) ist, die eine seitliche Öffnung (6) aufweist, in die das freie Ende der Biegefeder (2) derart bis über den Achsbereich der Hülse (5) hineinragt, daß eine konisch zulaufende zentrische Spitze (4) des Taststücks (1) an der Biegefeder (2) anliegt.

2. Taster nach Anspruch 1, dadurch gekennzeichnet, daß der Tastfühler in eine nutartige Vertiefung des Haltestücks (3) eingesetztist, wobei die Innenwand dieser Vertiefung die genannte Fläche (3a) des Haltestücks bildet, und daß diese Fläche (3a) zugleich einen Anschlag für die Verschiebung der Hülse (5) in einer Richtung bildet, während der andere Anschlag für die Verschiebung der Hülse in entgegengesetzter Richtung durch die obere Fläche der Biegefeder (2) bei Anlage an der unteren Fläche der seitlichen Öffnung (6) des Führungskörpers (7) gebildet ist.

3. Taster nach Anspruch 2, dadurch gekennzeichnet, daß eine die Vertiefung abdeckende Schutzplatte (10) an ihrem einen Ende durch eine den Führungskörper (7) und die Hülse (5) überdeckende Dichtung (11) auf einem Vorsprung (7a) des Führungskörpers (7) gehalten ist.

4. Taster nach Anspruch 3, dadurch gekennzeichnet, daß das in der nutartigen Vertiefung befestigte Ende der Biegefeder (2) durch zwei in Längsrichtung der Biegefeder hintereinanderliegende Schrauben (8a, 8) zwischen Klemmstücken (9) befestigt ist, wobei die Schrauben (8a, 8) zugleich auf dem oberen Klemmstück die Schutzplatte (10) an ihrem anderen Ende halten.

5. Taster nach einem der Ansprüche 3 oder 4, dadurch gekennzeichnet, daß die Dichtung (11) eine Membran ist, die mit einem inneren Rand (11a) zwischen Taststück (1) und Tasthülse (5) gehalten ist und mit dem äußeren Wulst (11b) in eine Rille 7b am Führungskörper (7) eingreift.

6. Taster nach einem der Ansprüche 3 bis 5, gekennzeichnet durch eine Dichtung zwischen Schutzplatte (10) und Seitenwand (3b) der nutartigen Vertiefung als rings um den Rand der Schutzplatte (10) geführte Ringdichtung (12).

7. Taster nach einem der Ansprüche 1 bis 6, dadurch gekennzeichnet, daß die Biegefeder (2) im Bereich des oder der aufgebrachten Dehnungsmeßstreifen eine ein- oder beidseitige Schwächung, z. B. eine Einschnürung, aufweist.

## Claims

1. Precision measuring scanner primarily for use as a distance recorder and equipped with one or more scanning probes on a retaining element (3) for example a plug gauge. wherein the scanning element (1) of the scanning probe is positioned at the free end of a torsion spring (2) secured by its other end and at a certain distance from a surface (3a) of the retaining element, to the said retaining element (3), a scanning insert in which the scanning element (1) is accommodated and secured being guided in an axially slidable manner in a guide body (7) firmly bearing on the said surface (3a), the guide body (7) having a lateral aperture (6) into which the free end of the torsion spring extends, on one side or on each side of the torsion spring one or more strain gauges being secured forming a means for the conversion of the movement of the scanning element into an electrical signal characterized by the fact that the scanning insert comprises a sleeve (5) having a lateral aperture (6) into which the free end of the torsion spring (2) extends to beyond the axial zone of the said casing (5) in such a way that a conically tapering central point (4) of the scanning element (1) bears against the torsion spring (2).

2. A scanner in accordance with Claim 1, characterized in that the scanning probe is inserted in a groove-like depression of the retaining element (3), the inner wall of the said depression forming the aforementioned surface (3a) of the retaining element, the said surface (3a) also forming a stop for the displacement of the sleeve (5) in one direction, while the other stop for the displacement of the sleeve in the opposite direction is formed by the upper surface of the torsion spring (2) when it bears on the lower surface of the lateral aperture (6) of the guide body (7).

3. Scanner in accordance with Claim 2, characterized by the fact that a protective plate (10) covering the depression is held at one of its ends by a seal (11) covering the guide body (7) and the sleeve (5), on a projection (7a) of the guide body (7).

4. Scanner in accordance with Claim 3, characterized by the fact that the end of the torsion spring (2) which is secured in the groove-like depression is held by two screws (8, 8a), between clamping pieces (9), the screws being situated in succession to each other in the longitudinal direction of the torsion spring, said screws (8, 8a) also holding the other end of protective plate (10) on the upper clamping piece.

5. Scanner in accordance with Claim 3 or 4, characterized by the fact that the seal (11) comprises a diaphragm held by an inner edge (11a) between the scanning element (1) and the sleeve (5) while the outer reinforcement (11b) engages a groove (7b) on the guide body (7).

6. Scanner in accordance with any one of Claims 3 to 5, characterized by a seal between the protective plate (10) and the lateral wall (3b) of the groove-like depression comprising an annular seal (12) positioned around the edge of the protective plate (10).

7. Scanner in accordance with any one of Claims 1 to 6, characterized by the fact that a weakened, for example a constricted, portion is included in the torsion spring in the zone of the strain gauge or strain gauges attached.

## Revendications

1. Palpeur de précision, servant en particulier de capteur de déplacement, qui comporte une ou plusieurs sondes de palpage sur une pièce de support (3), par exemple une touche de mesure, dans lequel la pièce de palpage (1) de la sonde de palpage se trouve à l'extrémité libre d'un ressort flexible (2), qui est fixé, par son autre extrémité, à la pièce de support (3) à distance d'une surface (3a) de la pièce de support, l'ensemble de palpage dans lequel la pièce de palpage (1) est reçue et fixée étant guidé de façon à coulisser axialement dans un corps de guidage (7) qui est placé fixement sur ladite surface (3a), le corps de guidage (7) comportant une ouverture latérale (6) dans laquelle pénètre l'extrémité libre du ressort flexible, et une ou plusieurs jauges extensométriques étant placées sur le ressort flexible d'un côté ou de deux côtés, respectivement, comme moyens pour transformer le mouvement de la pièce de palpage en un signal électrique, caractérisé en ce que l'ensemble de palpage est une douille (5) qui comporte une ouverture latérale (6) dans laquelle l'extrémité libre du ressort flexible (2) pénètre jusqu'au-delà de la zone axiale de la douille (5) de telle façon qu'une pointe centrale (4) de la pièce de palpage (1) s'amincissant coniquement est en contact avec le ressort flexible (2).

2. Palpeur selon la revendication 1, caractérisé en ce que la sonde de palpage est insérée dans un creux en forme de rainure de la pièce de support (3), la paroi intérieure de ce creux constituant la surface (3a) citée de la pièce de support, et en ce que cette surface (3a) constitue en même temps une butée pour le déplacement de la douille (5) dans une direction, tandis que l'autre butée pour le déplacement de la douille dans la direction opposée est formée par la surface supérieure du ressort flexible (2) lors du contact avec la surface inférieure de l'ouverture latérale (6) du corps de guidage (7).

3. Palpeur selon la revendication 2, caractérisé en ce qu'une plaque de protection (10) recouvrant le creux est retenue, à l'une de ses extrémités par un joint (11) recouvrant le corps de guidage (7) et la douille (5), sur une saillie (7a) du corps de guidage (7).

4. Palpeur selon la revendication 3, caractérisé en ce que l'extrémité du ressort flexible (2) fixée dans le creux en forme de rainure est fixée par deux vis (8a, 8) situées l'une après l'autre dans la direction longitudinale du ressort flexible entre des pièces de serrage (9), les vis (8a, 8) retenant en même temps la plaque de protection (10), à son autre extrémité, sur la pièce de serrage supérieure.

5. Palpeur selon l'une des revendications 3 ou 4, caractérisé en ce que le joint (11) est une membrane qui est retenue, par un bord intérieur (11a) entre la pièce de palpage (1) et la douille de palpage (5) et pénètre par le renflement extérieur (11b) dans une rainure (7b) formée sur le corps de guidage (7).

6. Palpeur selon l'une des revendications 3 à 5, caractérisé par un joint entre la plaque de protection (10) et la paroi latérale (3b) du creux en forme de rainure, réalisé sous la forme d'un joint annulaire (12) guidé tout autour du bord de la plaque de protection (10).

7. Palpeur selon l'une des revendications 1 à 6, caractérisé en ce que le ressort flexible (2) comporte dans la zone de la ou des jauges extensométriques qui y sont placées, un affaiblissement unilatéral ou bilatéral, par exemple un rétrécissement.

0 129 741